(19) Europäisches Patentamt
European Patent Office
Office européen des brevets

(11) **EP 2 774 895 A1**

(12) **EUROPEAN PATENT APPLICATION**
published in accordance with Art. 153(4) EPC

(43) Date of publication:
**10.09.2014 Bulletin 2014/37**

(21) Application number: **12845956.7**

(22) Date of filing: **17.10.2012**

(51) Int Cl.:
*C03C 3/085* (2006.01)   *C03C 3/087* (2006.01)
*C03C 3/091* (2006.01)   *C03C 3/093* (2006.01)
*G02F 1/1333* (2006.01)

(86) International application number:
**PCT/JP2012/076855**

(87) International publication number:
**WO 2013/065489 (10.05.2013 Gazette 2013/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.10.2011  JP 2011238869**

(71) Applicant: **Asahi Glass Company, Limited Tokyo 100-8405 (JP)**

(72) Inventor: **NISHIZAWA Manabu Tokyo 100-8405 (JP)**

(74) Representative: **Müller-Boré & Partner Patentanwälte PartG mbB Friedenheimer Brücke 21 80639 München (DE)**

(54) **GLASS SUBSTRATE AND METHOD FOR PRODUCING SAME**

(57)   The present invention provides a glass substrate having a high glass transition temperature, in which a compaction (C) is small in heat treatment at low temperature (150 to 300°C). A glass substrate containing, in terms of mol% on the basis of the following oxides: from 60 to 79% of $SiO_2$; from 2.5 to 18% of $Al_2O_3$; from 0 to 3% of $B_2O_3$; from 1 to 15% of MgO; from 0 to 1% of CaO; from 0 to 1% of SrO; from 0 to 1% of BaO; from 0 to 1% of $ZrO_2$; from 7 to 15.5% of $Na_2O$; from 0 to 3% of $K_2O$; and from 0 to 2% of $Li_2O$; wherein $Na_2O+K_2O$ is from 7 to 15.5%, $Na_2O/(Na_2O+K_2O)$ is from 0.77 to 1, $MgO+CaO+SrO+BaO$ is from 1 to 18%, $MgO-0.5Al_2O_3$ is from 0 to 10, and $MgO+0.5Al_2O_3$ is from 1 to 20, wherein the glass substrate has: a glass transition temperature of from 580 to 720°C; an average coefficient of thermal expansion within a range of from 50 to 350°C of from $65\times10^{-7}$ to $85\times10^{-7}$/°C; a compaction (C) of 15 ppm or less; a glass surface devitrification temperature ($T_c$) of from 900 to 1,300°C; a glass internal devitrification temperature ($T_d$) of from 900 to 1,300°C; a temperature ($T_4$) at which a viscosity reaches $10^4$ dPa·s of from 1,100 to 1,350°C; a relationship ($T_4-T_c$) between the temperature ($T_4$) at which a viscosity reaches $10^4$ dPa·s and the glass surface devitrification temperature ($T_c$) of from -50 to 350°C; and a relationship ($T_4-T_d$) between the temperature ($T_4$) at which a viscosity reaches $10^4$ dPa·s and the glass internal devitrification temperature ($T_d$) of from -50 to 350°C.

FIG. 1

**Description**

Technical Field

The present invention relates to a glass substrate. Particularly, the present invention relates to a glass substrate for a display panel to be used in various display panels such as a liquid crystal display (LCD) panel (particularly, a TFT panel), and a plasma display panel (PDP).

Background Art

An alkali-free glass containing no an alkali metal oxide has been conventionally used in a glass substrate for a LCD panel. As the reason for this, in the case where an alkali metal oxide is contained in a glass substrate, alkali ions in the glass substrate diffuse in a semiconductor film of a thin film transistor (TFT) used for driving an LCD panel during heat treatment carried out in manufacturing steps of the LCD panel, and there is a concern that this leads to deterioration of TFT characteristics.

Furthermore, because the alkali-free glass has low coefficient of thermal expansion and high glass transition point (Tg), dimensional change in manufacturing steps of an LCD panel is small and the influence on displayed quality due to thermal stress during the use of the LCD panel is small. For this reason, the alkali-free glass is preferred as a glass substrate for an LCD panel.

However, the alkali-free glass has the problems described below in the production aspect.

The alkali-free glass has properties that its viscosity is very high and melting thereof is difficult, and involves technical difficulties in production.

Furthermore, the alkali-free glass generally has poor effect caused by a refining agent. For example, in the case of using $SO_3$ as a refining agent, a temperature at which $SO_3$ foams (by decomposition) is lower than a melting temperature of a glass. Therefore, most part of $SO_3$ added decomposes and volatilizes form a molten glass before fining is performed, and fining effect cannot be sufficiently exhibited.

It has been proposed to use an alkali glass substrate containing an alkali metal oxide as a glass substrate for a TFT panel (for "a-Si TFT panel") (see Patent Document 1). As the reason for this, heat treatment in manufacturing steps of a TFT panel that has been conventionally conducted at a temperature of from 350 to 450°C is becoming possible to be conducted at relatively low temperature (about 250 to 300°C).

A glass containing an alkali metal oxide generally has high coefficient of thermal expansion. Therefore, $B_2O_3$ having an effect of reducing a coefficient of thermal expansion is generally contained in the glass for the purpose of achieving a coefficient of thermal expansion preferred as a glass substrate for a TFT panel (Patent Document 2).

However, in the case of a glass composition containing $B_2O_3$, $B_2O_3$ volatilizes when melting a glass, particularly in a melting step, a fining step and a float forming step, and as a result, the glass composition is prone to be heterogeneous. In the case where the glass composition becomes heterogeneous, such a glass composition affects flatness in forming the glass composition into a plate form. A glass substrate for a TFT panel is required to have high level of flatness in order to maintain a constant distance between two glass substrates that hold liquid crystal therebetween, that is, a constant cell gap, for the purpose of securing displayed quality. For this reason, for the purpose of securing predetermined flatness, after forming the glass composition into a sheet glass by a float process, the surface of the sheet glass is polished. In the case where predetermined flatness is not obtained in a formed sheet glass, time required for a polishing step becomes long, leading to the decrease of productivity. Furthermore, considering environmental load by the volatilization of $B_2O_3$, the content of $B_2O_3$ in a molten glass is preferred to be lower content.

However, in the case where the $B_2O_3$ content is low, it was difficult to lower the coefficient of thermal expansion to a level preferred as a glass substrate for a TFT panel and to obtain predetermined Tg and the like while suppressing the increase in viscosity.

Prior Art Documents

Patent Document

Patent Document 1: JP-A-2006-137631
Patent Document 2: JP-A-2006-169028

Summary of the Invention

Problems to be Solved by the Invention

The present invention has found that in the heat treatment at low temperature in manufacturing steps of a TFT panel, compaction (thermal shrinkage) of a glass at low temperature greatly affects film formation quality (film forming pattern accuracy) on a glass substrate. An object of the present invention is to provide a glass substrate suitable for a TFT panel, in which an alkali metal oxide is contained, an amount of $B_2O_3$ is small, compaction (C) is small in heat treatment at low temperature (150 to 300°C) in manufacturing steps of a TFT panel, and displacement during film formation patterning on a glass substrate is difficult to occur.

Means for Solving the Problems

The present invention provides a glass substrate containing, in terms of mol% on the basis of the following oxides:

from 60 to 79% of $SiO_2$;
from 2.5 to 18% of $Al_2O_3$;
from 0 to 3% of $B_2O_3$;
from 1 to 15% of MgO;
from 0 to 1% of CaO;
from 0 to 1% of SrO;
from 0 to 1% of BaO;
from 0 to 1% of $ZrO_2$;
from 7 to 15.5% of $Na_2O$;
from 0 to 3% of $K_2O$; and
from 0 to 2% of $Li_2O$;
wherein $Na_2O+K_2O$ is from 7 to 15.5%,
$Na_2O/(Na_2O+K_2O)$ is from 0.77 to 1,
$MgO+CaO+SrO+BaO$ is from 1 to 18%,
$MgO-0.5Al_2O_3$ is from 0 to 10, and
$MgO+0.5Al_2O_3$ is from 1 to 20,

wherein the glass substrate has:

a glass transition temperature of from 580 to 720°C;
an average coefficient of thermal expansion within a range of from 50 to 350°C of from $65\times10^{-7}$ to $85\times10^{-7}$/°C;
a compaction (C) of 15 ppm or less;
a glass surface devitrification temperature ($T_c$) of from 900 to 1,300°C;
a glass internal devitrification temperature ($T_d$) of from 900 to 1,300°C;
a temperature ($T_4$) at which a viscosity reaches $10^4$ dPa·s of from 1,100 to 1,350°C;
a relationship ($T_4-T_c$) between the temperature ($T_4$) at which a viscosity reaches $10^4$ dPa·s and the glass surface devitrification temperature ($T_c$) of from -50 to 350°C; and
a relationship ($T_4-T_d$) between the temperature ($T_4$) at which a viscosity reaches $10^4$ dPa·s and the glass internal devitrification temperature ($T_d$) of from -50 to 350°C.

Advantages of the Invention

In the glass substrate of the present invention, compaction (C) is small (15 ppm or less) in heat treatment at low temperature (150 to 300°C) in manufacturing steps of a TFT panel, and displacement during film formation patterning on a glass substrate is difficult to occur. Therefore, the glass substrate can be suitably used particularly as a glass substrate for a large-sized TFT panel, which responds to recent heat treatment at lower temperature, for example, a glass substrate having one side of 2 m or more as a mother glass.
Furthermore, because $B_2O_3$ content is low, volatilization of $B_2O_3$ during the production of a glass is small. Therefore, homogeneity of the glass substrate is excellent, and flatness and productivity are excellent.

Brief Description of the Drawing

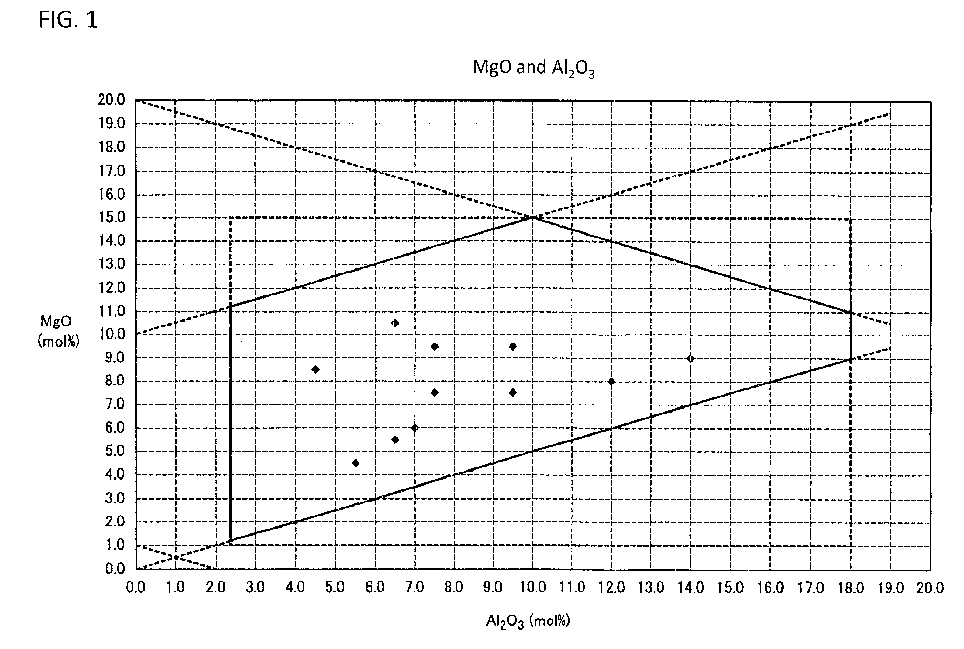

FIG. 1 is a graph showing the relationship between MgO and $Al_2O_3$ in the glass substrate of the present invention.

Modes for Carrying Out the Invention

<Glass substrate of the present invention>

The glass substrate of the present invention is a glass substrate containing, in terms of mol% on the basis of the following oxides:

from 60 to 79% of $SiO_2$;
from 2.5 to 18% of $Al_2O_3$;
from 0 to 3% of $B_2O_3$;
from 1 to 15% of MgO;
from 0 to 1% of CaO;
from 0 to 1% of SrO;
from 0 to 1% of BaO;
from 0 to 1% of $ZrO_2$;
from 7 to 15.5% of $Na_2O$;
from 0 to 3% of $K_2O$; and
from 0 to 2% of $Li_2O$;
wherein $Na_2O+K_2O$ is from 7 to 15.5%,
$Na_2O/(Na_2O+K_2O)$ is from 0.77 to 1,
$MgO+CaO+SrO+BaO$ is from 1 to 18%,
$MgO-0.5Al_2O_3$ is from 0 to 10, and
$MgO+0.5Al_2O_3$ is from 1 to 20,

wherein the glass substrate has:

a glass transition temperature of from 580 to 720°C;
an average coefficient of thermal expansion within a range of from 50 to 350°C of from $65 \times 10^{-7}$ to $85 \times 10^{-7}$/°C;
a compaction (C) of 15 ppm or less;
a glass surface devitrification temperature ($T_c$) of from 900 to 1,300°C;
a glass internal devitrification temperature ($T_d$) of from 900 to 1,300°C;
a temperature ($T_4$) at which a viscosity reaches $10^4$ dPa·s of from 1,100 to 1,350°C;
a relationship ($T_4$-$T_c$) between the temperature ($T_4$) at which a viscosity reaches $10^4$ dPa·s and the glass surface devitrification temperature ($T_c$) of from -50 to 350°C; and
a relationship ($T_4$-$T_d$) between the temperature ($T_4$) at which a viscosity reaches $10^4$ dPa·s and the glass internal devitrification temperature ($T_d$) of from -50 to 350°C.

The glass transition temperature (Tg) of the glass substrate of the present invention is 580°C or higher and 720°C or lower. If the glass transition temperature (Tg) of the glass substrate of the present invention falls with the above range, a viscosity of glass is increased in low temperature heat treatment (150 to 300°C) in manufacturing steps of a TFT panel. As a result, mobility of an alkali component in a glass to a TFT element is decreased, and deterioration of performance of TFT is suppressed. Form the viewpoint of decreasing the compaction (C), the glass transition temperature (Tg) is preferably 600°C or higher, more preferably 640°C or higher, and still more preferably 680°C or higher.
The average coefficient of linear expansion within the temperature range of from 50 to 350°C of the glass substrate of the present invention is $85 \times 10^{-7}$/°C or less. If the average coefficient of thermal expansion falls within the above range, dimensional change during manufacturing steps of a panel is small, and pattern superposition when superposing a counter glass substrate having a color filter and an array glass substrate having TFT becomes easy. Furthermore, because the influence on quality by thermal stress during the use of a panel is small, it is particularly preferred from the viewpoint of displayed quality.
The average coefficient of thermal expansion is preferably $80 \times 10^{-7}$/°C or less, more preferably $78x\ 10^{-7}$/°C or less, and still more preferably $76x\ 10^{-7}$/°C or less. In the case where a general soda lime glass is used in a counter glass substrate and the glass substrate of the present invention is used in an array glass substrate, the average coefficient of thermal expansion is $65x\ 10^{-7}$/°C or more from the viewpoint of difference in thermal expansion between those.
In the glass substrate of the present invention, the compaction (C) is 15 ppm or less. The compaction (C) is preferably 13 ppm or less, more preferably 11 ppm or less, and still more preferably 9 ppm or less. If the compaction (C) is 15 ppm or less, displacement during TFT film formation patterning on an array glass substrate is difficult to occur in the heat treatment at low temperature (150 to 300°) in manufacturing steps of a TFT panel.
In the present invention, the compaction (C) means the value measured by the method described below.

First of all a target glass is melted at 1,600°C, the molten glass is flown out and formed into a sheet form, followed by cooling. The glass sheet obtained is polished to obtain a sample having a size of 100 mm × 20 mm × 2 mm.

Next, the glass sheet obtained is heated to (glass transition temperature Tg + 50°C), maintained at this temperature for 1 minute and cooled to room temperature at a temperature lowering rate of 50°C/min. Thereafter, indentation is formed on the surface of the glass sheet at two parts in a long side direction at an interval A (A=90 mm).

Next, the glass sheet is heated to 300°C at a temperature rising rate of 100°C/hour (=1.6°C/min), maintained at 300°C for 1 hour and cooled to room temperature at a temperature lowering rate of 100°C/hour. The distance between indentations is measured, and the distance is defined as B. The compaction (C) is calculated from A and B thus obtained using the following formula. A and B are measured using an optical microscope.

$$C \text{ [ppm]} = (A-B)/A \times 10^6$$

In the glass substrate of the present invention, the glass surface devitrification temperature ($T_c$) is 1,300°C or lower, preferably 1,275°C or lower, more preferably 1,250°C or lower and particularly preferably 1,225°C or lower. Considering easiness for securing other physical properties, the glass surface devitrification temperature ($T_c$) is 900°C or higher.

The glass surface devitrification temperature ($T_c$) is an average value between the maximum temperature at which crystals precipitate on the surface of a glass and the minimum temperature at which crystals do not precipitate, which is measured by placing pulverized glass particles on a platinum dish, conducting heat treatment for 17 hours in an electric furnace controlled to a constant temperature, and observing them after the heat treatment with an optical microscope.

In the glass substrate of the present invention, the glass internal devitrification temperature ($T_d$) is 1,300°C or lower, preferably 1,275°C or lower, more preferably 1,250°C or lower, and still more preferably 1,225°C or lower. Considering easiness for securing other physical properties, the glass internal devitrification temperature ($T_d$) is 900°C or higher.

The glass internal devitrification temperature ($T_d$) is an average value between the maximum temperature at which crystals precipitate in the inside of a glass and the minimum temperature at which crystals do not precipitate, which is measured by placing pulverized glass particles on a platinum dish, conducting heat treatment for 17 hours in an electric furnace controlled to a constant temperature, and observing them after the heat treatment with an optical microscope.

In the glass substrate of the present invention, the temperature ($T_4$) at which a viscosity reaches $10^4$ dPa·s is 1,350°C or lower, preferably 1,300°C or lower, more preferably 1,275°C or lower, and still more preferably 1,250°C or lower. Considering easiness for securing other physical properties, the temperature ($T_4$) at which a viscosity reaches $10^4$ dPa·s is 1,100°C or higher.

A float process and a fusion process (down draw process) can be applied as a method for forming the glass substrate of the present invention. In the case of the fusion process, the viscosity of the glass at $T_d$ is preferably $10^{3.8}$ dPa·s or more, more preferably $10^4$ dPa·s or more, still more preferably $10^{4.7}$ dPa·s or more, and particularly preferably $10^{5.3}$ dPa·s or more. Considering easiness for securing other physical properties, in the case of the fusion process, it at $T_d$ is $10^{7.0}$ dPa·s or less.

In the case of the float process, the glass viscosity at $T_c$ is preferably $10^{3.8}$ dPa·s or more, more preferably $10^{3.9}$ dPa·s or more, and still more preferably $10^{4.0}$ dPa·s or more. Considering easiness for securing other physical properties, in the case of the float process, it at $T_c$ is $10^{7.0}$ dPa·s or less.

In the glass substrate of the present invention, the temperature ($T_2$) at which a viscosity reaches $10^2$ dPa·s is preferably 1,850°C or lower, more preferably 1,750°C or lower, and still more preferably 1,650°C or lower.

In the glass substrate of the present invention, the density is preferably 2.50 g/cm$^3$ or less, more preferably 2.45 g/cm$^3$ or less, still more preferably 2.43 g/cm$^3$ or less, and particularly preferably 2.41 g/cm$^3$ or less. Considering easiness for securing other physical properties, the density is 2.35 g/cm$^3$ or more.

In the glass substrate of the present invention, the photoelastic constant is preferably 33 nm/MPa/cm or less, more preferably 31 nm/MPa/cm or less, still more preferably 30 nm/MPa/cm or less, and particularly preferably 29 nm/MPa/cm or less.

When a glass substrate has a birefringence by stress generated in manufacturing steps of a LCD panel or during the use of an LCD apparatus, the phenomena that display of black becomes gray, and the contrast of LCD is decreased are recognized in some cases. By setting the photoelastic constant to 33 nm/MPa/cm or less, this phenomenon can be minimized.

Also, in the glass substrate of the present invention, considering easiness for securing other physical properties, the photoelastic constant is preferably 27 nm/MPa/cm or more.

The photoelastic constant can be measured by a disc compression method.

In the glass substrate of the present invention, Young's modulus is preferably 66 GPa or more, more preferably 70 GPa or more, and still more preferably 74 GPa or more. In the glass substrate of the present invention, Young's modulus is preferably 80 GPa or less. By setting the Young's modulus to fall within the range, there are merits that when a glass substrate is conveyed in a manufacturing step of a liquid crystal panel, warpage amount at a central part when holding two edges of the glass substrate is small, troubles such as contact among glass substrates are suppressed, and a space between glass substrates can be decreased.

Generally, high Young's modulus contributes to the improvement of mechanical characteristics of the glass substrate and the improvement of durability to breakage.

The reasons why the glass substrate of the present invention is limited to have the above composition are as follows.

$SiO_2$: $SiO_2$ is a component for forming a network of a glass, and if its content is less than 60 mol% (hereinafter simply referred to as "%"), there is a concern that the heat resistance and chemical durability of the glass are lowered, and the density, the average coefficient of thermal expansion within the range of from 50 to 350°C and the compaction (C) increase. The content thereof is preferably 62% ore more, and more preferably 63% or more.

However, if the content exceeds 79%, there is a concern that a photoelastic constant increases, and a problem that the viscosity of a glass at high temperature increases and meltability is deteriorated is caused. The content thereof is preferably 77% or less, more preferably 75% or less, and still more preferably 74% or less.

$Al_2O_3$: $Al_2O_3$ increases the glass transition temperature, enhances the weather resistance (solarization), heat resistance and chemical durability, and increases Young's modulus. If its content is less than 2.5%, there is a concern that the glass transition temperature is lowered. Also, there is a concern that the average coefficient of thermal expansion within the range of from 50 to 350°C and the compaction (C) increase. The content thereof is preferably 4% or more, more preferably 6% or more, and still more preferably 7% or more.

However, if the content exceeds 18%, there is a concern that the viscosity of a glass at high temperature increases and the meltability is deteriorated. Also, there is a concern that the devitrification temperature (surface devitrification temperature ($T_c$) on the surface of a glass and internal devitrification temperature ($T_d$) in the inside of a glass) increases, and the formability is deteriorated. The content thereof is preferably 16% or less, and more preferably 15% or less.

$B_2O_3$: $B_2O_3$ may be contained in an amount of up to 3% for the purposes of enhancing the meltability and the like. If its content exceeds 3%, the glass transition temperature decreases, or the average coefficient of thermal expansion within the range of from 50 to 350°C becomes small, and the photoelastic constant tends to become large. Therefore, the content thereof is preferably 1.5% or less. The content thereof is more preferably 0.5% or less, and it is still more preferred that $B_2O_3$ is not substantially contained.

The expression "is not substantially contained" means that it is not contained except the case where it is contained as unavoidable impurities originated from raw materials or the like, that is, means that it is not intentionally incorporated.

In the case of using as a glass substrate for a TFT panel, if the $B_2O_3$ content is low, the amount of $B_2O_3$ volatilized in a melting step, a fining step and a forming step when melting a glass during the manufacturing of a glass substrate is small, and the glass substrate manufactured has excellent homogeneity and flatness. As a result, in the case of using as a glass substrate for a TFT panel in which high level of flatness is required, displayed quality is excellent as compared with the conventional glass substrate for a TFT panel.

Also, even considering environmental load by the volatilization of $B_2O_3$, it is preferred that the content of $B_2O_3$ is lower.

MgO: MgO is contained because it has effects for decreasing the viscosity during melting of glass, promoting melting and enhancing weather resistance of a glass substrate. However, if its content is less than 1%, there is a concern that the viscosity of a glass at high temperature increases and the meltability is deteriorated. The content thereof is preferably 3% or more, more preferably 5% or more, and still more preferably 7% or more.

However, if it exceeds 15%, there is a concern that the average coefficient of thermal expansion within the range of from 50 to 350°C and the compaction (C) increase. Also, there is a concern that the devitrification temperature ($T_c$) increases. The content thereof is preferably 13% or less, more preferably less than 11%, and still more preferably 10% or less.

CaO: CaO can be contained because it has effects for decreasing the viscosity during melting of glass, and promoting melting. However, if it exceeds 1 %, there is a concern that the average coefficient of thermal expansion within the range of from 50 to 350°C and compaction (C) of the glass increase. The content thereof is preferably 0.5% or less. It is more preferred that CaO is not substantially contained.

SrO: SrO can be contained because it has effects for decreasing the viscosity during melting of glass and promoting melting. However, if its content exceeds 1%, there is a concern that the average coefficient of thermal expansion within the range of from 50 to 350°C and compaction (C) of the glass substrate increase. The content thereof is preferably 0.5% or less. It is more preferred that SrO is not substantially contained.

BaO: BaO can be contained because it has effects for decreasing the viscosity during melting of glass and promoting melting. However, if its content exceeds 1%, there is a concern that the average coefficient of thermal expansion within the range of from 50 to 350°C and compaction (C) of the glass substrate increase. The content thereof is preferably 0.5% or less. It is more preferred that BaO is not substantially contained.

$ZrO_2$: $ZrO_2$ can be contained because it has effects for decreasing the viscosity during melting of glass and promoting melting. However, if its content exceeds 1%, there is a concern that the density, average coefficient of thermal expansion within the range of from 50 to 350°C and compaction (C) of the glass substrate increase. The content thereof is preferably 0.5% or less. It is more preferred that $ZrO_2$ is not substantially contained.

MgO, CaO, SrO and BaO: MgO, CaO, SrO and BaO are contained in an amount of 1% or more in total for the purposes of enhancing weather resistance of the glass substrate and also for decreasing the photoelastic constant. The total content thereof is preferably 3% or more, more preferably 5% or more, and still more preferably 7% or more. However, if the total content exceeds 18%, there is a concern that the average coefficient of thermal expansion within the range of from 50 to 350°C and compaction (C) of glass increase. The total content thereof is preferably 16% or less, more preferably 12.5% or less, and still more preferably 10% or less.

$Na_2O$: $Na_2O$ is contained in an amount of from 7 to 15.5% because it has effects for decreasing the viscosity at a melting temperature of glass and making it easy to perform melting. The content thereof is preferably 9% or more, more preferably 11% or more, and still more preferably 12% or more.

If the content of $Na_2O$ exceeds 15.5%, the average coefficient of thermal expansion within the range of from 50 to 350°C and the compaction (C) increase, or the chemical durability is deteriorated. The content thereof is preferably 14.5% or less, more preferably 13.5% or less, and still more preferably 13% or less.

$K_2O$: $K_2O$ has the same effects as those of $Na_2O$, and therefore, it is contained in an amount of from 0 to 3%. However, if its content exceeds 3%, there is a concern that the average coefficient of thermal expansion within the range of from 50 to 350°C and the compaction (C) increase. In the case where $K_2O$ is contained, considering reduction in the compaction (C), its content is preferably 1.5% or less, and more preferably 0.5% or less. It is still more preferred that $K_2O$ is not substantially contained.

$Li_2O$: $Li_2O$ can be contained in an amount of from 0 to 2% for the purposes of decreasing the viscosity at a melting temperature of glass and making it easy to perform melting. However, if its content exceeds 2%, there is a concern that the glass transition temperature is lowered. Also, its content is preferably 2% or less for the purpose of obtaining the average coefficient of thermal expansion within the range of from 50 to 350°C of $85 \times 10^{-7}$/°C or less.

The content of $Li_2O$ is preferably 1% or less, and more preferably 0.5% or less. It is still more preferred that $Li_2O$ is not substantially contained.

$Na_2O$ and $K_2O$: For the purpose of sufficiently decreasing the viscosity at a melting temperature of glass and for the purpose of decreasing the photoelastic constant, the total content of $Na_2O$ and $K_2O$ is from 7 to 15.5%. For the purpose of decreasing the photoelastic constant, the total content is preferably 9% or more, more preferably 11% or more, and still more preferably 12% or more.

However, if the total content exceeds 15.5%, there is a concern that Tg excessively decreases, the average coefficient of thermal expansion within the range of from 50 to 350°C excessively increases, the compaction (C) increases, or Young's modulus decreases. The total content is preferably 15% or less, and more preferably 13% or less.

For the purpose of decreasing the compaction (C), $Na_2O$ and $K_2O$ are contained such that the following formula (1) satisfies from 0.77 to 1.

$$Na_2O/(Na_2O+K_2O) \qquad (1)$$

The above formula is an index to decrease the compaction (C) in the heat treatment at low temperature (150 to 300°C). The present inventors have found from the results of experiments and trial and error that when the above each component satisfies the range of the present application and the value obtained by the above formula (1) falls within the range of from 0.77 to 1, the compaction (C) satisfies 15 ppm or less while satisfying that Tg is from 580 to 720°C and the average coefficient of thermal expansion within the range of from 50 to 350°C is from $65 \times 10^{-7}$ to $85 \times 10^{-7}$. The formula (1) is preferably 0.9 or more, more preferably 0.95 or more, and still more preferably 1.

MgO and $Al_2O_3$: MgO and $Al_2O_3$ are contained such that the following formula (2) satisfies from 0 to 10. The respective "mol%" of MgO and $Al_2O_3$ contained in the composition of the glass substrate are substituted into "MgO" and "$Al_2O_3$" of the following formula (2), respectively.

$$MgO-0.5Al_2O_3 \qquad \text{(Formula 2)}$$

The above formula (2) is an index to decrease the photoelastic coefficient and also decrease the compaction (C) in the heat treatment at low temperature (150 to 300°C). The present inventors have found from the results of experiments and trial and error that the compaction (C) can be decreased as each of the above components satisfies the range of the present application and also the value obtained in the above formula (2) approaches the middle between 0 and 10, that is, approaches 5. The value obtained in the formula (2) is preferably 1 or more, more preferably 2 or more, still more preferably 3 or more, and particularly preferably 4 or more. The value is preferably 9 or less, more preferably 8 or less, still more preferably 7 or less, and particularly preferably 6 or less. For the purpose of obtaining low photoelastic constant, the value is preferably 2 or more.

In the case where MgO is a vertical axis and $Al_2O_3$ is a horizontal axis, when the above formula (2) is from 0 to 10 and MgO and $Al_2O_3$ fall within the above ranges, the scope of the present application is an area surrounded by a solid line in FIG. 1. The range that the compaction (C) can be decreased is an area near a straight line that the upper and lower Y-intercepts between two straight lines of $MgO-0.5Al_2O_3 = 0$ and $MgO-0.5Al_2O_3 = 10$ in the scope of the present application in FIG. 1 are 5, that is, an area within the scope of the present application and near the line of $MgO-0.5Al_2O_3 = 5$.

Also, MgO and $Al_2O_3$ are contained such that the formula (3) below satisfies from 1 to 20. The respective "mol%" of MgO and $Al_2O_3$ contained in the composition of a glass substrate are substituted into "MgO" and "$Al_2O_3$" in the formula (3) below.

$$MgO+0.5Al_2O_3 \qquad \text{(Formula 3)}$$

The above formula (3) is an index of the devitrification properties in manufacturing steps of the glass, specifically an index for satisfying that $T_4-T_c$ is from -50 to 350°C or $T_4-T_d$ is from -50 to 350°C. The present inventors have found from the results of experiments and trial and error that, in the case where each of the above components satisfies the scope of the present application and the value obtained by the above formula (3) falls within the range of from 1 to 20, $T_4-T_c$ or $T_4-T_d$ satisfies the above range while satisfying that Tg is from 580 to 720°C and the average coefficient of thermal expansion within the range of from 50 to 350°C is from $65\times10^{-7}$ to $85\times10^{-7}$/°C.

A float process and a fusion process (down draw process) can be applied as a method for forming the glass substrate of the present invention. If the fusion process is applied, the above formula (3) is preferably 15 or less, more preferably 13 or less, and still more preferably 11 or less. If the float process is applied, the above formula (3) is preferably 18 or less, more preferably 15 or less, and still more preferably 13 or less. To obtain low photoelastic constant, the above formula (3) is preferably 3 or more, more preferably 5 or more, and still more preferably 7 or more.

In the case where MgO is a vertical axis and $Al_2O_3$ is a horizontal axis, when the above formula (3) is from 1 to 20 and MgO and $Al_2O_3$ fall within the above ranges, the scope of the present application is an area surrounded by a solid line in FIG. 1.

Though the glass substrate of the present invention is preferably essentially composed of the above base composition, but it may contain other components within ranges where an object of the present invention is not impaired. The other components may be contained in an amount of 2% or less, preferably 1% or less, and more preferably 0.5% or less, in total. For example, there may be the case where ZnO, $Li_2O$, $WO_3$, $Nb_2O_5$, $V_2O_5$, $Bi_2O_3$, $MoO_3$, $P_2O_5$ or the like may be contained for the purpose of improving the weather resistance, meltability, devitrification, ultraviolet ray shielding and the like.

Also, for the purpose of improving the meltability and fining property of glass, $SO_3$, F, Cl and $SnO_2$ may be added into the base material composition such that these materials are contained in an amount of 2% or less in total. In the case where the glass substrate is used as a glass substrate for a TFT panel, the addition of those is more preferred.

Also, for the purpose of enhancing chemical durability of glass, $ZrO_2$, $Y_2O_3$, $La_2O_3$, $TiO_2$ or $SnO_2$ may be contained in an amount of 2% or less, preferably 1% or less, and more preferably 0.5% or less, in total in the glass. Of those, $Y_2O_3$, $La_2O_3$ and $TiO_2$ contribute to the enhancement of Young's modulus of a glass.

For the purpose of adjusting the color tone of the glass, colorants such as $Fe_2O_3$ and $CeO_2$ may be contained in the glass. The content of such colorants is preferably 1% or less in total.

Considering an environmental load, it is preferable that the glass substrate of the present invention does not substantially contain $As_2O_3$ and $Sb_2O_3$. Also, considering the stable achievement of float forming, it is preferable that the glass substrate does not substantially contain ZnO. However, the glass substrate of the present invention may be manufactured by forming by a fusion process without limitation to the forming by the float process.

<Manufacturing method and use of glass substrate of the present invention>

The glass substrate of the present invention can be suitably used as a glass substrate for a TFT panel. The details are described below.

(1) Manufacturing method of glass substrate

In the case of manufacturing the glass substrate in the present invention, similar to the case of manufacturing conventional glass substrates for a TFT panel, a melting-fining step and a forming step are carried out. Since the glass substrate in the present invention is an alkali glass substrate containing an alkali metal oxide ($Na_2O$ and $K_2O$), $SO_3$ can be effectively used as a refining agent, and a float process or a fusion process (down draw process) is suitable as the forming method.

In the manufacturing step of the glass substrate for a TFT panel, with an increase in size of TFT panels, it is preferable to adopt a float process in which a glass substrate with a large area can be formed easily and stably.

A float process and a fusion process (down draw process) can be adopted as the method for forming the glass substrate of the present invention. However, considering inhibition of devitrification when forming a sheet glass, when the fusion process is adopted, as the physical properties of the glass substrate, $T_4$-$T_d$ is from -50 to 350°C, it is preferred to satisfy $T_4$-$T_d$≥50°C, it is more preferred to satisfy $T_4$-$T_d$≥100°C, and it is still more preferred to satisfy $T_4$-$T_d$≥200°C.

Also, when the float process is adopted, $T_4$-$T_c$ is from -50 to 350°C, it is preferred to satisfy $T_4$-$T_c$≥-20°C, it is more preferred to satisfy $T_4$-$T_c$≥10°C, and it is still more preferred to satisfy $T_4$-$T_c$≥0°C.

A preferred embodiment of the manufacturing method of the glass substrate in the present invention will be described.

First of all, a molten glass obtained by melting raw materials is formed into a sheet form. For example, the raw materials are prepared so as to have a composition of the glass substrate to be obtained, and the raw materials are continuously thrown into a melting furnace, followed by heating at from 1,450°C to 1,650°C, thereby obtaining a molten glass. Then, this molten glass is formed into a glass sheet in a ribbon form by applying, for example, a float process.

Subsequently, the glass sheet in a ribbon form is taken out from the forming furnace, followed by cooling to a room temperature state by cooling means, and cutting to obtain a glass substrate.

The cooling means here is a cooling means that, in the case where a surface temperature of the glass sheet in a ribbon form taken out from the forming furnace is $T_H$ (°C), room temperature is $T_L$ (°C) and time that the surface temperature of the glass substrate in a ribbon form is cooled to $T_L$ from $T_H$ is t (min), an average cooling rate represented by $(T_H$-$T_L)$/t is from 10 to 300°C/min. The specific cooling means is not particularly limited, and the conventional cooling means may be used. For example, a method of using a heating furnace having temperature gradient is exemplified.

It is preferably that $T_H$ is (glass transition temperature Tg+20°C), specifically from 600 to 740°C.

The average cooling rate is preferably from 15 to 150°C/min, more preferably from 20 to 80°C/min, and still more preferably from 40 to 60°C/min. The glass substrate having the compaction (C) of 15 ppm or less, and preferably 13 ppm or less is easily obtained by the above manufacturing method of the glass substrate.

(2) TFT panel

The glass substrate of the present invention can be suitably used in a glass substrate for a TFT panel.

A method for manufacturing a TFT panel, including a film-forming step of forming a gate insulating film in an array substrate on a surface of the glass substrate of the present invention will be described.

The method for manufacturing a TFT panel using the glass substrate of the present invention is not particularly limited so long as it includes a film-forming step of forming the gate insulating film of the array substrate on the film-forming region by rising a temperature of the film-forming region on the surface of the glass substrate of the present invention to a temperature within the range of from 150 to 300°C (hereinafter referred to as "film-forming temperature") and maintaining at the film-forming temperature for from 5 to 60 minutes. Here, the film-forming temperature is preferably from 150 to 250°C, more preferably from 150 to 230°C, and still more preferably from 150 to 200°C. Time for holding the film-forming temperature is preferably from 5 to 30 minutes, more preferably from 5 to 20 minutes, and still more preferably from 5 to 15 minutes.

Since the film formation of the gate insulating film is conducted within the above film-forming temperature and hold time, the glass substrate is thermally shrunk during the time. After the glass substrate is thermally shrunk once, the result of thermal shrinkage is not greatly affected depending on the subsequent cooling conditions (cooling rate and the like). Since the glass substrate for a TFT panel in the present invention has small compaction (C), the thermal shrinkage of the glass substrate is small, and displacement of film-formed pattern is difficult to occur.

The film formation in the film-forming step can be achieved by, for example, the conventional CVD method.

In the method for manufacturing a TFT panel according to the present invention, the array substrate can be obtained by the conventional methods. The TFT panel can be manufactured by the following conventional step using the array substrate.

That is, the TFT panel can be manufactured by a series of steps including an orientation treatment step of forming an oriented film on each of the array substrate and the color filter substrate and conducting rubbing, a lamination step of laminating the TFT array substrate and the color filter substrate with high accuracy while holding a constant gap, a dividing step of dividing a cell from the substrate in a predetermined size, an injection step of injecting liquid crystal in the cell divided, and a polarizing plate-adhering step of adhering a polarizing plate to the cell.

The glass substrate of the present invention can be used by chemically strengthening by the conventional methods. However, for the purpose of improving displayed quality of the TFT panel, considering flatness of a glass substrate, it is preferable that the glass substrate is not chemically strengthened.

Examples

The present invention is described in more detail below with reference to the following Examples and Manufacturing Examples, but it should not be construed that the present invention is limited to these Examples and Manufacturing Examples.

Examples (Nos. 1 to 13 and 18 to 22) and Comparative Examples (Nos. 14 to 17) of the glass substrate of the present invention are described. The numerical values in the parentheses in Tables are calculated values.

Raw materials of respective components for the glass substrate were made up so as to have a composition shown in Tables 1 to 4, and a sulfate was added to the raw materials in an amount of 0.1 parts by mass in terms of $SO_3$ per 100 parts by mass of the raw materials of the components for the glass substrate, followed by heating and melting at a temperature of 1,600°C for 3 hours using a platinum crucible. In melting, a platinum stirrer was inserted, and stirring was performed for 1 hour, thereby homogenizing the glass. Then, the molten glass was flown out and cooled, followed by grinding and polishing in a sheet form.

With respect to the glass thus obtained, an average coefficient of thermal expansion within the range of from 50 to 350°C (unit: $\times 10^{-7}$/°C), a glass transition temperature (Tg) (unit: °C), a density, a viscosity, a compaction (C), a photoelastic constant, a Young's modulus, a devitrification temperature (glass surface devitrification temperature ($T_c$) and glass internal devitrification temperature ($T_d$)) and glass viscosities unit: dPa·s) at $T_4$ and $T_d$ were measured, and also $T_4$-$T_c$ and $T_4$-$T_d$ were calculated. The results are shown in Tables 1 to 3. Measurement method of each physical property is shown below.

(1) Tg: Tg is a value as measured using TMA and was determined in conformity with JIS R3103-3 (2001).
(2) Density: About 20 g of a glass sheet containing no bubbles was measured by Archimedes method.
(3) Viscosity: The viscosity was measured using a rotary viscometer and a temperature $T_4$ (°C) at which the viscosity thereof reached $10^4$ dPa·s was measured.
Also, a coefficient of Fulcher's equation was determined from the measurement result of the glass viscosity of the melt glass at high temperature (1,000 to 1,600°C), and the glass viscosity at the glass internal devitrification temperature ($T_d$) was determined from the Fulcher's equation using the coefficient.
(4) Compaction (C): The compaction (C) was measured by the above-described measurement method of compaction (C).
(5) Average coefficient of thermal expansion within the range of from 50 to 350°C: The average coefficient of thermal expansion was measured using a differential thermal expansion meter (TMA) and determined in conformity with JIS R3102 (1995).
(6) Devitrification temperature (glass surface devitrification temperature ($T_c$) and glass internal devitrification temperature ($T_d$)): Pulverized glass particles are placed on a platinum dish, and heat treatment is conducted for 17 hours in an electric furnace controlled to a constant temperature. By the observation of the glass particles after the heat treatment with an optical microscope, an average value between the maximum temperature at which crystals precipitate on the surface of a glass and the minimum temperature at which crystals do not precipitate is determined as the glass surface devitrification temperature $T_c$ (°C), and an average value between the maximum temperature at which crystals precipitate in the inside of a glass and the minimum temperature at which crystals do not precipitate is determined as the glass internal devitrification temperature $T_d$ (°C).
(7) Photoelastic constant: The photoelastic constant was measured by a disc compression method using light of 546 nm as a light source.
(8) Young's modulus: With respect to a glass having a thickness of from 7 to 10 mm, the Young's modulus was measured with an ultrasonic pulse method.

The residual amount of $SO_3$ in the glass was from 100 to 500 ppm.

[Table 1]

| mol% | No. 1 | No. 2 | No. 3 | No. 4 | No. 5 | No. 6 | No. 7 |
|---|---|---|---|---|---|---|---|
| $SiO_2$ | 73.0 | 67.0 | 64.0 | 64.0 | 61.0 | 71.5 | 69.5 |

(continued)

| mol% | No. 1 | No. 2 | No. 3 | No. 4 | No. 5 | No. 6 | No. 7 |
|---|---|---|---|---|---|---|---|
| $Al_2O_3$ | 7.0 | 12.0 | 12.0 | 14.0 | 14.0 | 7.5 | 9.5 |
| $B_2O_3$ | 0 | 0 | 3.0 | 0 | 3.0 | 0 | 0 |
| MgO | 6.0 | 8.0 | 8.0 | 9.0 | 9.0 | 7.5 | 7.5 |
| $ZrO_2$ | 0 | 0 | 0 | 0 | 0 | 0 | 0 |
| $Na_2O$ | 14.0 | 13.0 | 13.0 | 13.0 | 13.0 | 13.5 | 13.5 |
| $K_2O$ | 0 | 0 | 0 | 0 | 0 | 0 | 0 |
| $Na_2O+K_2O$ | 14.0 | 13.0 | 13.0 | 13.0 | 13.0 | 13.5 | 13.5 |
| $Na_2O/(Na_2O+K_2O)$ | 1.00 | 1.00 | 1.00 | 1.00 | 1.00 | 1.00 | 1.00 |
| $MgO+CaO+SrO+BaO$ | 6.0 | 8.0 | 8.0 | 9.0 | 9.0 | 7.5 | 7.5 |
| $MgO-0.5Al_2O_3$ | 2.5 | 2.0 | 2.0 | 2.0 | 2.0 | 3.8 | 2.8 |
| $MgO+0.5Al_2O_3$ | 9.5 | 14.0 | 14.0 | 16.0 | 16.0 | 11.3 | 12.3 |
| Surface devitrification temperature $T_c$ (°C) | | 1264 | 1244 | 1291 | 1239 | 1063 | 1192 |
| Internal devitrification temperature $T_d$ (°C) | | 1264 | 1244 | 1291 | 1239 | 1063 | 1192 |
| $T_4$ (°C) | 1256 | 1314 | 1240 | 1296 | (1228) | 1267 | 1296 |
| $T_4-T_c$ (°C) | | 51 | -4 | 5 | -11 | 205 | 105 |
| $T_4-T_d$ (°C) | | 51 | -4 | 5 | -11 | 205 | 105 |
| Glass viscosity at $T_d$ (dPa·s) | | 10E4.3 | 10E4.0 | 10E4.0 | 10E3.9 | 10E5.3 | 10E4.7 |
| Compaction (C) (ppm) | 7 | 4 | 13 | 6 | 13 | 9 | 12 |
| Average coefficient of thermal expansion at 50 to 350°C ($\times 10^{-7}$/°C) | 79 | 77 | 78 | 76 | 74 | 77 | 76 |
| Tg(°C) | 617 | 689 | 645 | 697 | 640 | 632 | 654 |
| Density (g/cm$^3$) | 2.41 | 2.43 | 2.44 | 2.46 | 2.44 | 2.41 | 2.43 |
| Photoelastic constant (nm/MPa/cm) | | 29 | 30 | 30 | 29 | 30 | 29 |
| Young's modulus (GPa) | | 78 | 72 | 75 | 72 | 70 | 71 |

[Table 2]

| mol% | No. 8 | No. 9 | No. 10 | No. 11 | No. 12 | No. 13 |
|---|---|---|---|---|---|---|
| $SiO_2$ | 69.5 | 67.5 | 69.5 | 74.5 | 74.5 | 77.5 |
| $Al_2O_3$ | 7.5 | 9.5 | 6.5 | 4.5 | 6.5 | 5.5 |
| $B_2O_3$ | 0 | 0 | 0 | 0 | 0 | 0 |
| MgO | 9.5 | 9.5 | 10.5 | 8.5 | 5.5 | 4.5 |
| $ZrO_2$ | 0 | 0 | 0 | 0 | 0 | 0 |
| $Na_2O$ | 13.5 | 13.5 | 13.5 | 12.5 | 13.5 | 12.5 |
| $K_2O$ | 0 | 0 | 0 | 0 | 0 | 0 |
| $Na_2O+K_2O$ | 13.5 | 13.5 | 13.5 | 12.5 | 13.5 | 12.5 |
| $Na_2O/(Na_2O+K_2O)$ | 1.00 | 1.00 | 1.00 | 1.00 | 1.00 | 1.00 |

(continued)

| mol% | No. 8 | No. 9 | No. 10 | No. 11 | No. 12 | No. 13 |
|---|---|---|---|---|---|---|
| MgO+CaO+SrO+BaO | 9.5 | 9.5 | 10.5 | 8.5 | 5.5 | 4.5 |
| MgO-0.5Al$_2$O$_3$ | 5.8 | 4.8 | 7.3 | 6.3 | 2.3 | 1.8 |
| MgO+0.5Al$_2$O$_3$ | 13.3 | 14.3 | 13.8 | 10.8 | 8.8 | 7.3 |
| Surface devitrification temperature T$_c$ (°C) | 1158 | 1259 | 1167 | <923 | <949 | <1001 |
| Internal devitrification temperature T$_d$ (°C) | 1158 | 1259 | 1167 | <923 | <949 | <1001 |
| T$_4$(°C) | 1238 | (1268) | (1247) | 1229 | 1258 | 1276 |
| T$_4$-T$_c$ (°C) | 81 | -9 | 80 | >306 | >309 | >275 |
| T$_4$-T$_d$(°C) | 81 | -9 | 80 | >306 | >309 | >275 |
| Glass viscosity at T$_d$ (dPa·s) | 10E4.5 | 10E4.1 | 10E4.5 | >10E6.3 | >10E6.3 | >10E5.9 |
| Compaction (C) (ppm) | 9 | 13 | 12 | 12 | 15 | 12 |
| Average coefficient of thermal expansion at 50 to 350°C ($\times 10^{-7}$/°C) | 81 | 78 | 78 | 75 | 75 | 70 |
| Tg (°C) | 632 | 659 | 623 | 604 | 608 | 593 |
| Density (g/cm$^3$) | 2.43 | 2.44 | 2.43 | 2.40 | 2.40 | 2.37 |
| Photoelastic constant (nm/MPa/cm) | 30 | 30 | 30 | 30 | 31 | 31 |
| Young's modulus (GPa) | 73 | 73 | 69 | 69 | 69 | 68 |

[Table 3]

| mol% | No. 14 | No. 15 | No. 16 | No. 17 | No. 18 |
|---|---|---|---|---|---|
| SiO$_2$ | 64.5 | 67.0 | 71.0 | 68.0 | 72.0 |
| Al$_2$O$_3$ | 6.0 | 11.0 | 2.0 | 1.1 | 3.0 |
| B$_2$O$_3$ | 0 | 0 | 0 | 0 | 0 |
| MgO | 11.0 | 6.0 | 11.5 | 16.4 | 11.0 |
| ZrO$_2$ | 2.5 | 0 | 0 | 0 | 0 |
| Na$_2$O | 12.0 | 13.0 | 15.5 | 14.5 | 11.0 |
| K$_2$O | 4.0 | 3.0 | 0 | 0 | 3.0 |
| Na$_2$O+K$_2$O | 16.0 | 16.0 | 15.5 | 14.5 | 14.0 |
| Na$_2$O/(Na$_2$O+K$_2$O) | 0.75 | 0.81 | 1.00 | 1.00 | 0.79 |
| MgO+CaO+SrO+BaO | 11.0 | 6.0 | 11.5 | 16.4 | 11.0 |
| MgO-0.5Al$_2$O$_3$ | 8.0 | 0.5 | 10.5 | 15.9 | 9.5 |
| MgO+0.5Al$_2$O$_3$ | 14.0 | 11.5 | 12.5 | 17.0 | 12.5 |
| Surface devitrification temperature T$_c$ (°C) | 1150 | | | | |
| Internal devitrification temperature T$_d$ (°C) | 1150 | | | | |
| T$_4$(°C) | 1170 | 1200 | 1090 | 1090 | 1180 |
| T$_4$-T$_c$ (°C) | 20 | | | | |
| T$_4$-T$_d$ (°C) | 20 | | | | |
| Glass viscosity at T$_d$ (dPa·s) | | | | | |
| Compaction (C) (ppm) | 22 | 17 | 15 | 15 | 11 |

(continued)

| mol% | No. 14 | No. 15 | No. 16 | No. 17 | No. 18 |
|---|---|---|---|---|---|
| Average coefficient of thermal expansion at 50 to 350°C ($\times 10^{-7}$/°C) | 91 | 88 | 86 | 86 | 80 |
| Tg (°C) | 620 | 620 | 570 | 570 | 610 |
| Density (g/cm$^3$) | 2.53 | | 2.49 | 2.49 | 2.47 |
| Photoelasticconstant (nm/MPa/cm) | | | | | |
| Young's modulus (GPa) | | | | | |

[Table 4]

| mol% | No. 19 | No. 20 | No. 21 | No. 22 |
|---|---|---|---|---|
| SiO$_2$ | 67 | 72 | 65.5 | 66.5 |
| Al$_2$O$_3$ | 13 | 6 | 8.5 | 11 |
| B$_2$O$_3$ | 0 | 0.5 | 1.6 | 2 |
| MgO | 8 | 9 | 10 | 6.5 |
| CaO | 0 | 0 | 0.3 | 0.5 |
| SrO | 0 | 0 | 0.3 | 0 |
| BaO | 0 | 0 | 0.3 | 0 |
| ZrO$_2$ | 0 | 0 | 0 | 0.5 |
| Na$_2$O | 11.5 | 10.5 | 12.5 | 13 |
| K$_2$O | 0 | 2 | 1 | 0 |
| Li$_2$O | 0.5 | 0 | 0 | 0 |
| Na$_2$O+K$_2$O | 11.5 | 12.5 | 13.5 | 13.0 |
| Na$_2$O/(Na$_2$O+K$_2$O) | 1.00 | 0.84 | 0.93 | 1.00 |
| MgO+CaO+SrO+BaO | 8.0 | 9.0 | 10.9 | 7.0 |
| MgO-0.5Al$_2$O$_3$ | 1.5 | 6.0 | 5.8 | 1.0 |
| MgO+0.5Al$_2$O$_3$ | 14.5 | 12.0 | 14.3 | 12.0 |
| Surface devitrification temperature T$_c$ (°C) | 1275 | 1175 | 1175 | 1245 |
| Internal devitrification temperature T$_d$ (°C) | 1275 | 1175 | 1175 | 1245 |
| T$_4$ (°C) | 1311 | 1250 | 1188 | 1273 |
| T$_4$-T$_c$ (°C) | 36 | 75 | 13 | 28 |
| T$_4$-T$_d$ (°C) | 36 | 75 | 13 | 28 |
| Glass viscosity at T$_d$ (dPa·s) | 10E4.2 | 10E4.5 | 10E4.1 | 10E4.2 |
| Compaction (C) (ppm) | 2 | 12 | (15) | 6 |
| Average coefficient of thermal expansion at 50 to 350°C ($\times 10^{-7}$/°C) | 70 | 79 | 85 | 75 |
| Tg (°C) | 702 | 618 | 613 | 643 |
| Density (g/cm$^3$) | 2.44 | 2.41 | 2.48 | 2.44 |
| Photoelastic constant (nm/MPa/cm) | 29 | 30 | 28 | 29 |
| Young's modulus (GPa) | 77 | 72 | 74 | 73 |

As is apparent from Tables 1 to 4, the glasses of the Examples (Nos. 1 to 13 and 18 to 22) have high glass transition temperature Tg. Furthermore, in the glasses of the Examples, the average coefficient of thermal expansion within the range of from 50 to 350°C is from $65\times10^{-7}$ to $85\times10^{-7}$/°C. Therefore, in the case of using as a glass substrate for a TFT panel, dimensional change in the manufacturing step of a panel is small, and this makes it easy to perform pattern superposition when superposing a color filter and an array substrate. Also, the influence on quality by thermal stress when the panel is used is small, and this is particularly preferred from the viewpoint of displayed quality.

Because the compaction (C) is 15 ppm or less, displacement during film formation patterning on a glass substrate is difficult to occur. Therefore, the glass substrate of the present invention can be suitably used particularly as a glass substrate for a large-sized TFT panel that responds to the recent heat treatment at lower temperature, for example, as a glass substrate having one side of 2 m or more as a mother glass.

Also, the cases of Nos. 2 to 13 and 19 to 22 satisfy that $T_4$-$T_c$ is from -50 to 350°C or $T_4$-$T_d$ is from -50 to 350°C, and devitrification during the formation of a sheet glass is inhibited.

Regarding the cases of Nos. 1 and 18, each of physical properties ($T_c$, $T_d$, $T_4$, $T_4$-$T_c$, $T_4$-$T_d$, photoelastic constant and Young's modulus) satisfies the ranges of the present invention. $T_c$ and $T_d$ of the cases of Nos. 11 to 13 also satisfy the ranges of the present application.

In the cases of Nos. 14 and 15, because the compaction (C) is larger than 15 ppm, and the average coefficient of thermal expansion within the range of from 50 to 350°C is larger than $85\times10^{-7}$/°C, dimensional change in the manufacturing step of a TFT panel is large, pattern superposition when superposing a color filter and an array substrate becomes difficult, and displacement during film formation patterning on a glass substrate is prone to occur.

In the cases of Nos. 16 and 17, the compaction (C) is 15 ppm or less, but the glass transition temperature is lower than 580°C and the average coefficient of thermal expansion within the range of from 50 to 350°C is larger than $85\times10^{-7}$/°C. Therefore, since dimensional change in manufacturing steps of the TFT panel is large, pattern superposition when superposing a color filter and an array substrate becomes difficult, and displacement during film formation patterning on a glass substrate is prone to occur.

While the invention has been described in detail and with reference to specific embodiments thereof, it will be apparent to one skilled in the art that various changes and modifications can be made therein without departing from the spirit and scope thereof.

This application is based on Japanese Patent Application No. 2011-238869 filed on October 31, 2011, the entire subject matters of which are incorporated herein by reference.

Industrial Applicability

The glass substrate of the present invention is suitable as a glass substrate for a TFT panel, and can be used in substrates for other displays, such as plasma display panel (PDP) and inorganic electroluminescence display.

**Claims**

1. A glass substrate containing, in terms of mol% on the basis of the following oxides:

   from 60 to 79% of $SiO_2$;
   from 2.5 to 18% of $Al_2O_3$;
   from 0 to 3% of $B_2O_3$;
   from 1 to 15% of MgO;
   from 0 to 1% of CaO;
   from 0 to 1% of SrO;
   from 0 to 1% of BaO;
   from 0 to 1% of $ZrO_2$;
   from 7 to 15.5% of $Na_2O$;
   from 0 to 3% of $K_2O$; and
   from 0 to 2% of $Li_2O$;
   wherein $Na_2O+K_2O$ is from 7 to 15.5%,
   $Na_2O/(Na_2O+K_2O)$ is from 0.77 to 1,
   $MgO+CaO+SrO+BaO$ is from 1 to 18%,
   $MgO-0.5Al_2O_3$ is from 0 to 10, and
   $MgO+0.5Al_2O_3$ is from 1 to 20,

   wherein the glass substrate has:

a glass transition temperature of from 580 to 720°C;
an average coefficient of thermal expansion within a range of from 50 to 350°C of from $65 \times 10^{-7}$ to $85 \times 10^{-7}/°C$;
a compaction (C) of 15 ppm or less;
a glass surface devitrification temperature ($T_c$) of from 900 to 1,300°C;
a glass internal devitrification temperature ($T_d$) of from 900 to 1,300°C;
a temperature ($T_4$) at which a viscosity reaches $10^4$ dPa·s of from 1,100 to 1,350°C;
a relationship ($T_4$-$T_c$) between the temperature ($T_4$) at which a viscosity reaches $10^4$ dPa·s and the glass surface devitrification temperature ($T_c$) of from -50 to 350°C; and
a relationship ($T_4$-$T_d$) between the temperature ($T_4$) at which a viscosity reaches $10^4$ dPa·s and the glass internal devitrification temperature ($T_d$) of from -50 to 350°C.

2. The glass substrate according to claim 1, having a photoelastic constant of from 27 to 33 nm/MPa/cm.

3. The glass substrate according to claim 1 or 2, wherein the relationship between the temperature ($T_4$) at which a viscosity reaches $10^4$ dPa·s and the glass surface devitrification temperature ($T_c$) is $T_4$-$T_c \geq$-20°C.

4. The glass substrate according to claim 1 or 2, wherein the relationship between the temperature ($T_4$) at which a viscosity reaches $10^4$ dPa·s and the glass internal devitrification temperature ($T_d$) is $T_4$-$T_d \geq$-50°C.

5. A method for producing a glass substrate, wherein a molten glass obtained by melting raw materials is formed into a sheet glass using a float process, thereby obtaining the glass substrate according to claim 3.

6. A method for producing a glass substrate, wherein a molten glass obtained by melting raw materials is formed into a sheet glass using a fusion process, thereby obtaining the glass substrate according to claim 4.

FIG. 1

MgO and $Al_2O_3$

EP 2 774 895 A1

## INTERNATIONAL SEARCH REPORT

| International application No. |
|---|
| PCT/JP2012/076855 |

**A. CLASSIFICATION OF SUBJECT MATTER**

*C03C3/085*(2006.01)i, *C03C3/087*(2006.01)i, *C03C3/091*(2006.01)i, *C03C3/093* (2006.01)i, *G02F1/1333*(2006.01)i

According to International Patent Classification (IPC) or to both national classification and IPC

**B. FIELDS SEARCHED**

Minimum documentation searched (classification system followed by classification symbols)
C03C1/00-14/00

Documentation searched other than minimum documentation to the extent that such documents are included in the fields searched
Jitsuyo Shinan Koho          1922-1996   Jitsuyo Shinan Toroku Koho   1996-2012
Kokai Jitsuyo Shinan Koho    1971-2012   Toroku Jitsuyo Shinan Koho   1994-2012

Electronic data base consulted during the international search (name of data base and, where practicable, search terms used)
INTERGLAD

**C. DOCUMENTS CONSIDERED TO BE RELEVANT**

| Category* | Citation of document, with indication, where appropriate, of the relevant passages | Relevant to claim No. |
|---|---|---|
| X | JP 2010-059038 A (Nippon Electric Glass Co., Ltd.), 18 March 2010 (18.03.2010), paragraph [0070]; example 4 (Family: none) | 1-6 |
| X Y | JP 2010-527892 A (Corning Inc.), 19 August 2010 (19.08.2010), paragraph [0024]; tables 1-1 to 1-4 & US 2008/0286548 A1 & EP 2158171 A & WO 2008/143999 A1 & CN 101679106 A & KR 10-2010-0019526 A | 1-4,6 5 |
| X Y | JP 08-133778 A (Asahi Glass Co., Ltd.), 28 May 1996 (28.05.1996), paragraph [0024]; example 10 & US 5631195 A & US 5780373 A | 1-5 6 |

☒ Further documents are listed in the continuation of Box C.       ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 19 December, 2012 (19.12.12) | 08 January, 2013 (08.01.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2012/076855 |

C (Continuation). DOCUMENTS CONSIDERED TO BE RELEVANT

| Category* | Citation of document, with indication, where appropriate, of the relevant passages | Relevant to claim No. |
| --- | --- | --- |
| X | JP 11-240735 A (Asahi Glass Co., Ltd.), | 1-5 |
| Y | 07 September 1999 (07.09.1999), example 13; paragraph [0041] (Family: none) | 6 |

Form PCT/ISA/210 (continuation of second sheet) (July 2009)

**INTERNATIONAL SEARCH REPORT**

International application No.

PCT/JP2012/076855

**Box No. II     Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III     Observations where unity of invention is lacking (Continuation of item 3 of first sheet)**

This International Searching Authority found multiple inventions in this international application, as follows:

    The invention of claim 1 does not have novelty and a special technical
feature since the invention is disclosed in the following documents 1-4, and
consequently, the invention of claim 1 does not comply with the requirement
of unity.
    The inventions of claims indicated below are relevant to a main invention
group.
    Claims 1-3 and 5
    Document 1: JP 2010-059038 A
    Document 2: JP 2010-527892 A
(Continued to extra sheet)

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**     ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

**INTERNATIONAL SEARCH REPORT**

International application No.

PCT/JP2012/076855

Continuation of Box No.III of continuation of first sheet(2)

Document 3: JP 08-133778 A
Document 4: JP 11-240735 A

Form PCT/ISA/210 (extra sheet) (July 2009)

**EP 2 774 895 A1**

**Patent documents cited in the description**

- JP 2006137631 A
- JP 2006169028 A
- JP 2011238869 A